# EUROPÄISCHE PATENTSCHRIFT

(11) **EP 2 126 344 B1**
(45) Veröffentlichungstag und Bekanntmachung des Hinweises auf die Patenterteilung: **31.05.2017**
(21) Anmeldenummer: 08734929.6
(22) Anmeldetag: 01.04.2008
(51) Int. Cl.: F03B 13/10, H02K 9/22, H02K 5/12

(54) **TAUCHENDE ENERGIEERZEUGUNGSANLAGE**
IMMERSIBLE ENERGY GENERATION INSTALLATION
INSTALLATION DE PRODUCTION D'ÉNERGIE À IMMERGER

(30) Priorität: 03.04.2007 DE 102007016380
(43) Veröffentlichungstag der Anmeldung: 02.12.2009
(73) Patentinhaber: Voith Patent GmbH, 89522 Heidenheim (DE)
(72) Erfinder: HOLSTEIN, Benjamin, 89520 Heidenheim (DE); PERNER, Norman, 89233 Neu-Ulm (DE)
(74) Vertreter: Dr. Weitzel & Partner
(86) Internationale Anmeldenummer: PCT/EP2008/002577
(87) Internationale Veröffentlichungsnummer: WO 2008/119546

(56) Entgegenhaltungen:
- CH-A- 222 625
- GB-A- 2 050 525
- RO-B- 118 896
- SU-A1- 399 973
- US-A- 4 445 046

## Beschreibung

Die Erfindung betrifft eine tauchende Energieerzeugungsanlage, insbesondere zur Gewinnung elektrischer Energie aus einer Meeresströmung, vorzugsweise einer Gezeitenströmung, wobei die tauchende Energieerzeugungsanlage freistehend ausgebildet ist. Die GB 2 050 525 A zeigt eine solche tauchende Energieerzeugungsanlage. Freistehende, tauchende Energieerzeugungsanlagen werden ohne zusätzliche wasserbautechnische Maßnahmen, wie Dammstrukturen, in eine Gewässerströmung gestellt. Dies kann beispielsweise ein Fließgewässer oder eine Meeresströmung, insbesondere eine Gezeitenströmung, sein. Solche freistehend und tauchend ausgebildeten Energieerzeugungsanlagen umfassen typischerweise wenigstens eine Wasserturbine, die wenigstens mittelbar einen elektrischen Generator antreibt. Bevorzugt ist die Wasserturbine an einer Gondel befestigt, in der die elektrische Maschine untergebracht ist. Die Gondel ist wiederum an einer Tragstruktur gehaltert, wobei diese Tragstruktur auf dem Gewässergrund fundamendiert sein kann oder sie ist als schwimmfähige Einheit ausgebildet, die mittels eines Anker- und Zugseilsystems in Position gehalten wird.

Für Energieerzeugungsanlagen der genannten Art gestalten sich Wartungs- und Servicearbeiten schwierig, da insbesondere bei einer Energiegewinnung aus einer Meeresströmung die Zugänglichkeit der Energieerzeugungsanlage erschwert ist. In den meisten Fällen wird es notwendig sein, zur Ausführung einer Wartung die Einheit aus elektrischer Maschine und Turbine über den Wasserspiegel hinaus anzuheben. Aus diesem Grund wird nach einer solchen Ausgestaltung einer gattungsgemäßen Energieerzeugungsanlage gesucht, die lange Wartungsintervalle ermöglicht und besonders bevorzugt für die gesamte Maschinenlaufzeit wartungsfrei ausgelegt ist.

Der Erfindung liegt die Aufgabe zugrunde, die Kühlung der Generatorkomponenten des elektrischen Generators einer freistehenden, getauchten Energieerzeugungsanlage so auszubilden, dass ein möglichst robustes System entsteht, das für einen dauerhaften Betrieb im korrosiven Umgebungswasser, insbesondere in salzhaltigem und mit Sedimenten durchsetztem Umgebungswasser, möglichst lange Wartungszeiten aufweist. Das Gesamtsystem sollte konstruktiv und fertigungstechnisch einfach sein und den Bau einer kompakten Gondel zur Aufnahme der elektrischen Maschine ermöglichen.

Zur Lösung der voranstehend genannten Aufgabe haben die Erfinder erkannt, dass die Komponenten der elektrischen Maschine, nachfolgend als Generatorkomponenten bezeichnet, mittels eines Korrosionsschutzelements vom Umgebungswasser getrennt werden müssen und zugleich zwischen dem Korrosionsschutzelement und den wärmeerzeugenden Generatorkomponenten die thermische Kopplung durch die Aufnahme eines die Zwischenräume im Korrosionsschutzelement auffüllenden Wärmeleitmediums zu verbessern ist. Demnach dient das Korrosionsschutzelement nicht nur der Kapselung der Generatorkomponenten gegen Korrosion, sondern es wirkt zusätzlich als Wärmetauscherfläche, zu der die in den Generatorkomponenten anfallende Wärme geleitet wird und welches wenigstens in Teilbereichen im direkten thermischen Kontakt zum Umgebungswasser steht. Die Kühlung erfolgt bevorzugt rein passiv.

Die zu schützenden Generatorkomponenten sind zum einen der Stator mit den Statorblechpaketen und den Ankerwicklungen, zum anderen der Läufer mit seinen magnetischen Komponenten. Im Falle einer fremderregten Maschine sind demnach läuferseitig die Läuferblechpakete und die Erregerwicklungen durch ein thermisch über ein Wärmeleitmedium gekoppeltes Korrosionsschutzelement abzukapseln. Zusätzlich können durch die erfindungsgemäße Maßnahme eines kombinierten Korrosionschutzes in Verbindung mit einer Wärmeleitstruktur die elektronischen Generatorkomponenten sowie die leistungselektronischen Komponenten zur Netzankopplung gekapselt und gekühlt werden.

Gemäß einer ersten Variante der Erfindung wird das Korrosionsschutzelement als geschlossenes Gehäuse ausgebildet und erzeugt beispielsweise einen gekapselten Statorbereich oder entsprechend einen gekapselten Läuferbereich. Diese gekapselten Bereiche dienen dazu, wenigstens einen Teil der Generatorkomponenten aufzunehmen, wobei für diese erste Variante ein Freivolumen zwischen den Generatorkomponenten und dem Korrosionsschutzelement vorliegt, das erfindungsgemäß mit einem Wärmeleitmedium aufgefüllt wird. Durch eine solche Kapselung kann das Eindringen des Umgebungswassers in einen festgelegten Volumenbereich und damit eine korrosive Belastung der jeweils gekapselten Komponenten sicher verhindert werden. Dabei ist es gemäß einer vorteilhaften Ausgestaltungsvariante notwendig, im Bereich des Spalts zwischen Stator und Läufer ein Spaltrohr vorzusehen, das einen Teil des Wandungsbereichs des Korrosionsschutzelements bildet und durch das im Wesentlichen ungehindert das Magnetfeld des elektrischen Generators hindurchdringt. Bevorzugt wird dieses Spaltrohr durch ein austenitisches Stahlblech ausgebildet. Innerhalb des durch das Korrosionsschutzelement abgekapselten Bereichs werden alle Zwischenräume zur möglichst guten thermischen Kopplung zwischen dem gekapselten Generatorelement und dem Korrosionsschutzelement mittels eines Wärmeleitmediums aufgefüllt. Dies kann beispielsweise ein flüssiger oder zähflüssiger Stoff wie ein Öl oder eine synthetische Ester-Verbindung für elektrotechnische Zwecke sein. Auch Feststoffmaterialien, beispielsweise in granularer Form, für das Wärmeleitmedium sind denkbar. Darüber hinaus kann das Wärmeleitmedium durch ein Ausgießen der Zwischenräume im Korrosionsschutzelement, beispielsweise mittels eines Epoxidharzes, bewirkt werden. Bei einem vollständigen Vergießen ist es denkbar, die Außenfläche des Vergusskörpers durch eine Ummantelung oder Beschichtung, die Teil des Korrosionsschutzelements ist, gegen Korrosion zu schützen, so dass im Spaltbereich kein Spaltrohr im eigentlichen Sinne vorliegt, sondern lediglich ein ausgegossener Bereich, dessen Ränder die Grenzfläche zum Spalt bilden.

Gemäß der Erfindung wird der Gehäusebereich, in dem die zu schützende Generatorkomponente positioniert ist, beispielsweise der Stator, mit dem Umgebungswasser durchströmt, so dass das Korrosionsschutzelement im Wesentlichen den Konturen der zu schützenden Generatorkomponente folgt, beispielsweise können die Statorblechpakete und die Ankerwicklungen beschichtet oder vergossen werden oder in eine gegen das Umgebungswasser gegen Korrosion schützende Ummantelung eingepackt oder durch einen Korrosionsschutzanstrich geschützt sein. Erfindungsgemäß werden wiederum Zwischenräume zwischen dem Korrosionsschutzelement und der Generatorkomponente zur verbesserten thermischen Kopplung mittels eines Wärmeleitmediums bevorzugt mit einem Epoxidharz ausgegossen. Die Oberfläche des Korrosionsschutzelements bildet wiederum die thermische Kontaktfläche zu der durch das Gehäuse der Energieerzeugungsanlage geleiteten Umgebungsströmung.

Ferner können für vorteilhafte Ausgestaltungen der Erfindung zusätzliche Elemente vorgesehen sein, die in thermischer Verbindung zum Wärmeleitmedium stehen und die dazu geeignet sind, einen Wärmefluss vom Wärmeleitmedium durch das Korrosionsschutzelement hindurch zur Umgebungsströmung zu ermöglichen. Im einfachsten Fall sind dies Wärmetauscherstrukturen. Alternativ können ein oder mehrere Wärmerohre (heatpipes) verwendet werden. Wärmerohre weisen eine in den zu kühlenden Körper hineinragende, geschlossene Struktur auf, die teilweise mit einem Wärmeübertragungsmedium gefüllt ist. Auf der anderen Seite ist diese Struktur von einer Wärmesenke umgeben. Durch die Verdampfung des Wärmeübertragungsmedium auf der Seite der Wärmequelle, die Zufuhr des so entstehenden Dampfs zur kalten Seite des Wärmerohrs mittels Konvektion und die anschließende Kondensation erfolgt eine effiziente Wärmeabgabe. Das Wärmerohr kann so konstruiert werden, dass das Wärmeübertragungsmedium durch Schwerkraft oder durch Kapillarkräfte zur heißen Seite zurückgeführt wird. Vorzugsweise wird eine Vielzahl von Wärmerohren verwendet, die in das Wärmeleitmedium zwischen den Abwärme erzeugenden Generatorkomponenten oder unmittelbar in die Generatorkomponenten, beispielsweise die Ankerwicklungen des Stators, reichen. Gemäß der Erfindung ist ein System von Durchgangskanälen für das Umgebungswasser vorgesehen die durch das Korrosionsschutzelement hindurchführen und welche, ohne in einen Stoffaustausch mit dem durch das Korrosionsschutzelement abgekapselten Bereich zu treten, der Abführung von Abwärme der Generatorkomponenten dienen. Demnach sind die Wandungen der Durchgangskanäle wiederum Teile des umschließenden Korrosionsschutzelements.

Darüber hinaus sind für eine vorteilhafte Ausgestaltung an einem oder mehreren Bereichen der Außenseite des Korrosionsschutzelements, insbesondere in zerklüfteten oder strömungsberuhigten Bereichen, Bewuchsschutzsysteme vorgesehen. Diese wirken gegen einen fortschreitenden Bewuchs durch die Anwendung von Ultraschallpulsen, UV-Strahlen oder kurzzeitiger Erhitzung und halten so insbesondere Strömungskanäle und Kühlrippen, die Teil des Korrosionsschutzelements sind, dauerhaft frei von Bewuchs.

Nachfolgend wird die Erfindung anhand vorteilhafter Ausgestaltungen in Verbindung mit den Figuren genauer beschrieben, in denen im Einzelnen Folgendes dargestellt ist:
- Figur 1: zeigt einen Axialschnitt durch eine Energieerzeugungsanlage gemäß der Stand der Technik.
- Figur 2: zeigt einen Teilausschnitt aus Figur 1 mit einer Ausführungsform der Erfindung.
- Figur 3: zeigt eine weitere Ausgestaltung der Erfindung mit einem vom Umgebungswasser durchströmten Statorbereich.
- Figur 4: zeigt eine Detailansicht eines Schnitts durch den Stator mit einem ausgegossenen Korrosionsschutzelement.
- Figur 5: zeigt ein thermisches Bewuchsschutzsystem zum Schutz eines Rohrs.
- Figur 6: zeigt ein thermisches Bewuchsschutzsystem zum Schutz von Kühlrippen.
- Figur 7: zeigt ein thermisches Bewuchsschutzsystem zum Schutz einer Einströmungsöffnung.
- Figur 8: zeigt ein Schema für ein thermisches Bewuchsschutzsystem betrieben durch einen Bypass zu einer Wärmequelle im Kühlkreislauf.

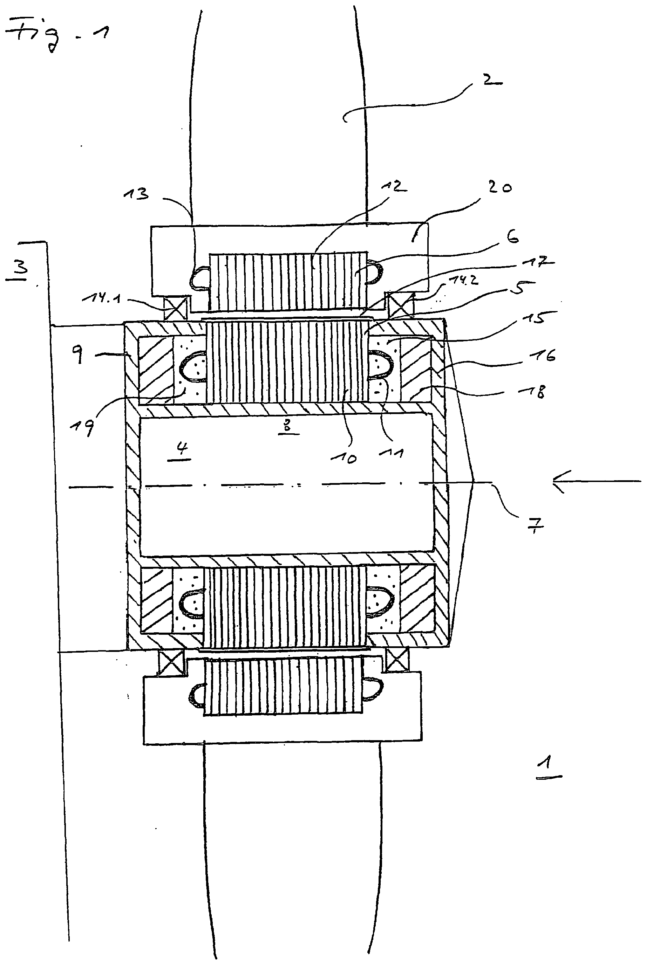

Der in Figur 1 gezeigte Axialschnitt durch eine schematisch vereinfacht dargestellte tauchende Energieerzeugungsanlage 1 skizziert Teile einer Wasserturbine 2, die als propellerförmige Turbine mit wenigstens zwei Rotorblätter ausgebildet ist. Weitere Ausgestaltungen der Wasserturbine 2 sind denkbar, beispielsweise die Verwendung einer Vertikalturbine. Die Wasserturbine 2 ist an einer Gondel 4 befestigt, welche wiederum wenigstens mittelbar an einer Tragstruktur 3 gehaltert ist. Die tauchende Energieerzeugungsanlage 1 steht frei in einer Umgebungsströmung, typischerweise einer Meeresströmung und insbesondere bevorzugt einer Gezeitenströmung. Unter freistehend wird eine solche Anordnung der tauchenden Energieerzeugungsanlage verstanden, bei die Wasserturbine 2 nicht in eine Dammstruktur integriert ist.

Für die in Figur 1 dargestellte Ausgestaltung ist die Wasserturbine 2 mit einem elektrischen Generator 8 verbunden, um diesen direkt anzutreiben. Es wird ein als Außenläufer ausgebildeter Läufer 6 des elektrischen Generators 8 zusammen mit der Wasserturbine 2 als ein auf dem Gehäuse 16 der Gondel 4 umlaufendes Bauteil ausgebildet. Entsprechend sind hierzu die Lager 14.1 und 14.2 skizziert. Allerdings sind auch Innenläuferanordnungen und ein mittelbarer Antrieb des elektrischen Generators 8 durch die Wasserturbine 2 denkbar.

Zum Schutz der Generatorkomponenten, insbesondere des Stators 5 mit den Statorblechpaketen 10 und den Ankerwicklungen 11 sowie des Läufers 6 und den in diesen vorgesehenen Magnetelementen, beispielsweise im Fall eines fremderregten Synchrongenerators die Läuferblechpakete 12 und die Erregerwicklungen 13, wird ein Korrosionsschutzelement 9 vorgesehen, das die Generatorkomponenten zur Abschirmung gegen die korrosive Wirkung des Umgebungswassers flüssigkeitsdicht einhüllt. Entsprechend können weitere Generatorkomponenten, beispielsweise die Leistungselektronik zur Netzankopplung, in das Korrosionsschutzelement 9 eingeschlossen sein, beziehungsweise es wird diesen ein eigenes Korrosionsschutzelement 9 zugeordnet.

Nachfolgend wird eine Ausgestaltung eines Korrosionsschutzelements 9 dargelegt, das einen abgekapselten Statorbereich 19 abschließt. Die nachfolgenden Ausführungen können entsprechend auf einen gekapselten Läuferbereich 20 oder auf weitere, nicht in der Figur im Einzelnen dargestellte, abgekapselte Bereiche zur Aufnahme der Leistungselektronik übertragen werden. Der abgekapselte Statorbereich 19 dient der Aufnahme der Statorblechpakete 10 und der Ankerwicklungen 11. Dieser wird durch das Korrosionsschutzelement 9 umschlossen, das für den vorliegenden Fall durch Teile des lastaufnehmenden Gehäuses 16 der Gondel 4 gebildet wird. Geschlossen wird dieses einhüllende Korrosionsschutzelement 9 im Bereich des Spalts zwischen Stator 5 und Läufer 6 durch ein Spaltrohr 17, das aus einem nicht magnetisierbaren Material besteht, durch das das Generatorfeld im Wesentlichen ungehindert hindurchdringen kann. Als mögliche Ausgestaltung bietet sich ein Blech aus einem austenitischen Stahl an. Durch das Gehäuse 16 und das Spaltrohr 17 wird das Korrosionsschutzelement 9 vollendet und umschließt den gekapselten Statorbereich 19.

Zusätzlich zum Korrosionsschutz dienen Teile des Korrosionsschutzelements 9 als Kühlelement, für die beim Betrieb des elektrischen Generators 8 anfallende Verlustwärme. Daher stehen wenigstens Teilbereiche des Korrosionsschutzelements 9 zur Kühlung im direkten thermischen Kontakt mit dem Umgebungswasser. Gemäß der in Figur 1 gezeigten Ausgestaltung sind dies im Wesentlichen die Teilbereiche des äußeren Gehäuses 16, die den gekapselten Statorbereich 19 umschließen. Als zusätzliche Maßnahme wird die thermische Kopplung zwischen den sich aufheizenden Generatorkomponenten und den diese umschließenden Korrosionsschutzelemente 9 durch das Auffüllen der Zwischenräume innerhalb des Korrosionsschutzelements 9 mittels eines Wärmeleitmediums 15 verbessert.

Das Wärmeleitmedium 15 kann ein flüssiges Medium, beispielsweise ein Öl oder eine synthetische, organische Ester-Verbindung für elektrotechnische Zwecke, sein. Bevorzugt wird eine biologisch leicht abbaubare, nicht wassergefährdende Ester-Verbindung, die die Norm IEC61699 erfüllt. Ferner sollte diese eine hohe spezifische Wärme und einen hohen Brennpunkt aufweisen. Ferner ist ein geringer Dampfdruck bei den gewählten Betriebsbedingungen von Vorteil. Beispielsweise kann als geeignete Ester-Verbindung ein halogenfreier Pentaerythritester verwendet werden, der beispielsweise unter dem Markennamen Midel®7131 von der Firma M&I Materials Ltd. angeboten wird. Alternativ wird als Wärmeleitmedium ein Festkörper verwendet, beispielsweise ein thermisch gut leitfähiges, als Granulat vorliegendes Schüttgut. Weitere Ausgestaltungen des Wärmeleitmediums 15 schließen Vergussmassen, wie beispielsweise Epoxidharz, ein. Sobald durch das Korrosionsschutzelement 9 ein abgekapselter Innenbereich, beispielsweise ein gekapselter Statorbereich 19 oder ein gekapselter Läuferbereich 20, gebildet wird, so kann gemäß einer Weitergestaltung der Erfindung eine gewisse thermische Ausdehnung des Wärmeleitmediums 15 beim Erwärmen zugelassen werden, wenn wenigstens Teile des Korrosionsschutzelements 9 elastisch ausgebildet sind oder wenn Druckausgleichsgefäße mit den gekapselten Bereichen in Verbindung stehen.

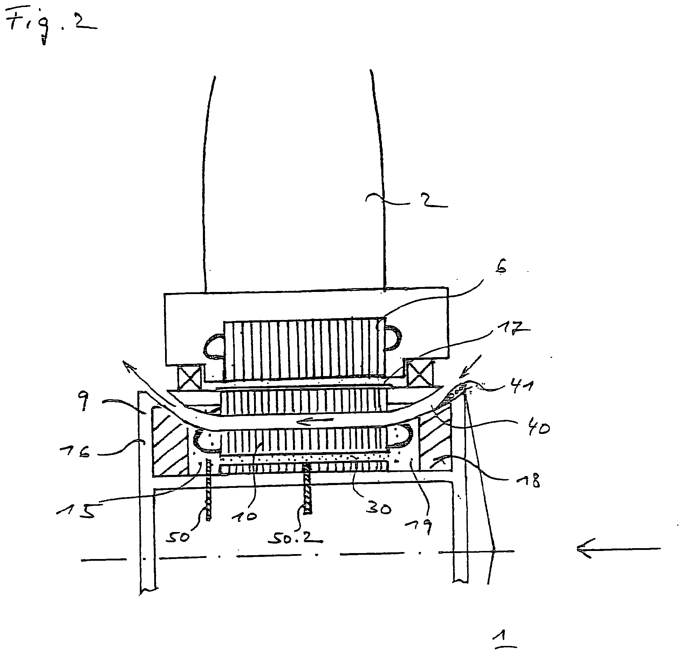

Figur 2 zeigt mögliche Ausgestaltungsvarianten der Erfindung, die die Wärmeabführung von den Generatorelementen verbessern. Die in Figur 2 dargestellte Ausgestaltung verwendet wiederum einen gekapselten Statorbereich 19, der allseitig von einem abdichtenden Korrosionsschutzelement 9 umschlossen wird, das durch Teile des Gehäuses 16 und ein Spaltrohr 17 gebildet wird. Wiederum ist in den Zwischenräumen innerhalb des Korrosionsschutzelements 9 ein Wärmeleitmedium 19 vorgesehen. Dieses kann durch Durchgangsöffnungen im Statorblechpaket 30 effizient Wärme aus dem Inneren des Statorblechpakets 10 abführen. Ferner wird durch den Verbund des Statorblechpakets 10 mit dem Gehäuse 16 und/oder dem Spaltrohr 7 in Form einer Presssitzpassung der unmittelbare Wärmeübergang vom Statorblechpaket 10 zum Korrosionsschutzelement 9 verbessert. Darüber hinaus wird die thermische Kopplung zwischen dem Wärmeleitmedium 15 und dem Korrosionsschutzelement 9 dadurch erhöht, dass in den gekapselten Statorbereich 19 hineintragende Kühlrippen 18 vorgesehen sind, die einstückig mit dem Gehäuse 16 ausgebildet sind.

Ferner zeigt Figur 2 die Erfindung, wobei mittels einen geschlossenen Rohrsystems Umgebungswasser durch den gekapselten Statorbereich 19 hindurchgeleitet wird. Hierzu ist in Figur 2 ein Durchgangskanal 40 gezeigt, an dem luvseitig an der Gondel 4 eine Zuströmöffnung für das Umgebungswasser vorliegt, das wiederum leeseitig abgezogen wird. Vorliegend wird also eine passive Durchströmung vorgesehen, zusätzlich kann eine Zwangsströmung durch die Verwendung einer Pumpe im Durchgangskanal 40 realisiert werden. Für die voranstehend beschriebene Ausgestaltung ist der Wandungsbereich des Durchgangskanals 40 Teil des Korrosionsschutzelements 9 und ist demgemäß aus einem entsprechenden Material ausgebildet. Das heißt, für die in Figur 2 dargestellte Ausgestaltung tritt das Umgebungswasser nicht in den abgekapselten Statorbereich 19 ein. Stattdessen besteht lediglich ein thermischer Kontakt zu den vom Durchgangskanal 40 durchstoßenen Generatorkomponenten, insbesondere des Statorblechpakets 10 sowie zum Wärmeleitmedium 19, das sich innerhalb des abgekapselten Statorbereichs 19 befindet.

Ferner kann zur Wärmeabführung aus dem gekapselten Statorbereich 19 ein oder mehrere Wärmerohre 50, 50.2 vorgesehen sein, die einen Energiefluss von der warmen Seite des gekapselten Statorbereichs 19 zu einer kühlen Seite, beispielsweise dem Inneren der Gondel 4, bewirken. Alternativ kann ein Wärmerohr (nicht dargestellt) durch das Korrosionsschutzelement 9 zum Außenbereich mit der Umgebungsströmung geführt werden. Darüber hinaus wird bevorzugt, eine Vielzahl von Wärmerohren 50, 50.2 zu verwenden, die in das Wärmeleitmedium 15 oder die zu kühlende Generatorkomponente reichen - siehe das mit dem Bezugszeichen 50.2 versehene Wärmerohr in Figur 2, das im thermischen Kontakt zu den Statorblechpaketen steht. Dabei können zur Aufnahme der Wärmerohre im Statorblechpaket Ausnehmungen, zum Beispiel Bohrlöcher, vorgesehen sein. Weiterhin können alternativ oder zusätzlich aktive Wärmetauscherelemente in thermischen Kontakt zum Wärmeleitmedium 15 im Inneren des gekapselten Statorbereichs 19 treten und Wärme zu einem mit der Außenströmung im thermischen Kontakt stehenden Wärmetauscher führen. Dieser im Einzelnen nicht in den Figuren dargestellter Wärmetauscher kann beispielsweise eine Kühlrippenstruktur auf der Außenseite des Korrosionsschutzelements 9 umfassen, die in Kontakt zum Umgebungswasser tritt.

Für alle Strukturen der tauchenden Energieerzeugungsanlage 1, die mit dem Umgebungswasser in Kontakt treten, tritt die Problematik eines möglichen Bewuchses auf. Dies stellt insbesondere für zergliederte Strukturen ein Problem dar. Beispiele hierfür sind Einlassöffnungen, etwa für die Variante, bei der ein Durchgangskanal 40 durch einen gekapselten Bereich vorliegt, oder Kühlrippen auf der Außenseite des Korrosionsschutzelements 9. Demgemäß wird für eine vorteilhafte Ausgestaltung der Erfindung insbesondere an solchen kritischen Bereichen ein Bewuchsschutzsystem 41 vorgesehen. In Figur 2 ist ein solches Bewuchsschutzsystem 41 am luvseitigen Strömungseingang des Durchgangskanals 40 skizziert. Mögliche Ausgestaltungen eines Bewuchsschutzsystems umfassen Ultraschallelemente oder UV-Einrichtungen, die zur regelmäßigen Zerstörung eines sich ansiedelnden Bewuchses dienen. Gemäß einer Ausgestaltungsvariante umfasst das Bewuchsschutzsystem 41 eine Heizeinrichtung, die das Bewuchsschutzsystem 41 und die Umgebung, in der dieses angeordnet ist, auf eine solche Temperatur wenigstens kurzzeitig anhebt, bei der ein Bewuchs vernichtet wird.

Während des Aufheizens eines thermischen Bewuchsschutzsystems kann ein nachteiliger Effekt auf die Kühlwirkung dadurch ausgeglichen werden, dass das Aufheizen kurzzeitig und getaktet erfolgt und die heizungsfreien Zwischenzeiten entsprechend lang ausgedehnt sind. Gemäß einer alternativen Gestaltung kann das thermische Bewuchsschutzsystem so ausgestaltet sein, dass zu einer bestimmten Zeit jeweils nur Teilbereiche aufgeheizt werden, die dann vom Bewuchs befreit werden, während andere Teile erst später wärmebehandelt werden, so dass die Kühlleistung der gesamten Struktur nur unwesentlich verschlechtert wird. Hierzu ist beispielsweise denkbar, mehrere Durchgangskanäle 40 vorzusehen, die jeweils separate Zugänge aufweisen, an denen jeweils nur diesen Zugängen zugeordnete thermische Bewuchsschutzsysteme vorliegen. Zu einer bestimmten Zeit wird dann nur eines der Bewuchsschutzsysteme thermisch aktiviert, so dass das für die Kühlung verwendete, in die anderen Durchgangskanäle einströmende Umgebungswasser von der Aufheizungsmaßnahme an einem einzelnen Durchgangskanal nicht beeinflusst wird. Ferner besteht die Möglichkeit für Anlagen, für die bestimmte Stillstandszeiten auftreten, etwa bei Gezeitenkraftwerken, den Betrieb des thermischen Bewuchsschutzsystems auf die Dauer des Stillstands des Generators oder allgemein auf Zeiten geringer Leistungserzeugung zu beschränken.

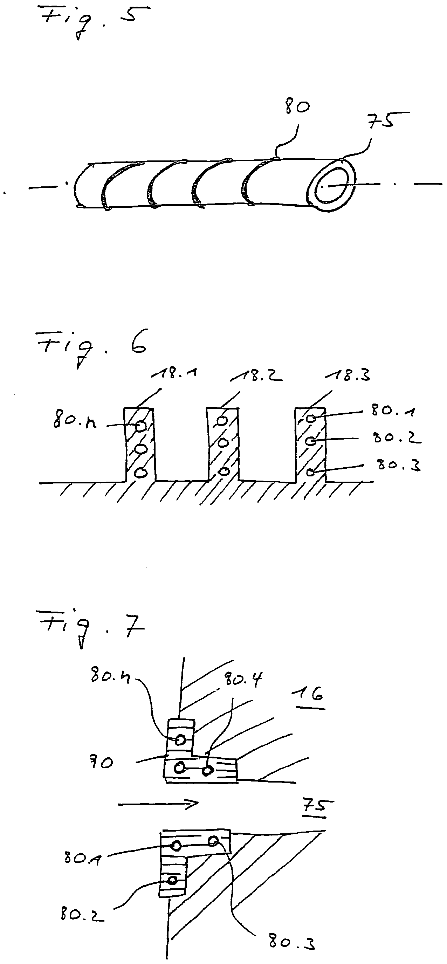

Das voranstehend beschriebene thermische Bewuchsschutzsystem kann für eine Vielzahl von sich dauerhaft in einer Seewasserumgebung befindenden technischen Anlagen und insbesondere für zergliederte Strukturen oder Einströmungsöffnungen derselben verwendet werden. Die Figuren 5 - 8 zeigen mögliche Ausgestaltungsvarianten. In Figur 5 ist ein Rohr 75 dargestellt, das mit einer Heizwendel 80 umkleidet ist, die wenigstens jeweils für kurze Zeit zur Vernichtung eines im Rohr entstandenen Bewuchses aufgeheizt wird. Entsprechend können solche Heizwendel 80.1, ..., 80.n in Kühlrippen 18.1, 18.2, 18.3 vorgesehen sein, die beispielsweise in einem passiven Kühlelement auf einer Gehäuseaußenseite einer tauchenden technischen Anlage angeordnet sind. Entsprechend kann gemäß Figur 7 am Einlass eines Rohrs 75, das in das Innere eines Gehäuses 16 führt, eine beheizbare Einströmungsöffnung 90 vorgesehen sein. Die voranstehend beschriebenen Heizwendel 80, 80.1, ..., 80.n können beispielsweise als elektrisch betriebene Widerstandsheizelemente ausgeführt sein.

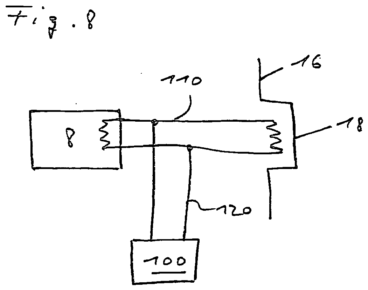

Eine Alternative die nicht zum Gegenstand der Erfindung gehört ist in Fig. 8 gezeigt. Dabei wird zur Wärmeabfuhr von einem elektrischen Generator 8 ein Kühlkreislauf 110 vorgesehen, der auf der Außenseite eines Gehäuses 16 Wärme an eine Kühlrippe 18 abgibt. Zur Realisierung des thermischen Bewuchsschutzsystems wird ein Bypass 120 verwendet, der den Kühlkreislauf 110 mit einer separaten Wärmequelle 100 verbindet. Immer wenn dies der Betrieb des die Abwärme produzierenden und zu kühlenden technischen Systems, vorliegend der elektrische Generator 8, zulässt, wird das thermische Bewuchsschutzsystem aktiviert. Für tauchende Energieerzeugungsanlagen tritt dieser Fall insbesondere während des Stillstands der Wasserturbine und damit bei einem stillgesetzten elektrischen Generator 8 auf. Ist der Betriebsmodus des Ausheizens aktiviert, so wird die Bypass-Verbindung 120 vom Kühlkreislauf 110 zur separaten Wärmequelle 100 geöffnet und das im Kühlkreislauf nunmehr über die separate Wärmequelle 100 geführte Kühlmedium wird auf eine solche Temperatur aufgeheizt, bei der am Zielort, vorliegend der Kühlrippe 18, ein anhaftender Bewuchs mittels einer Übertemperatur vernichtet wird.

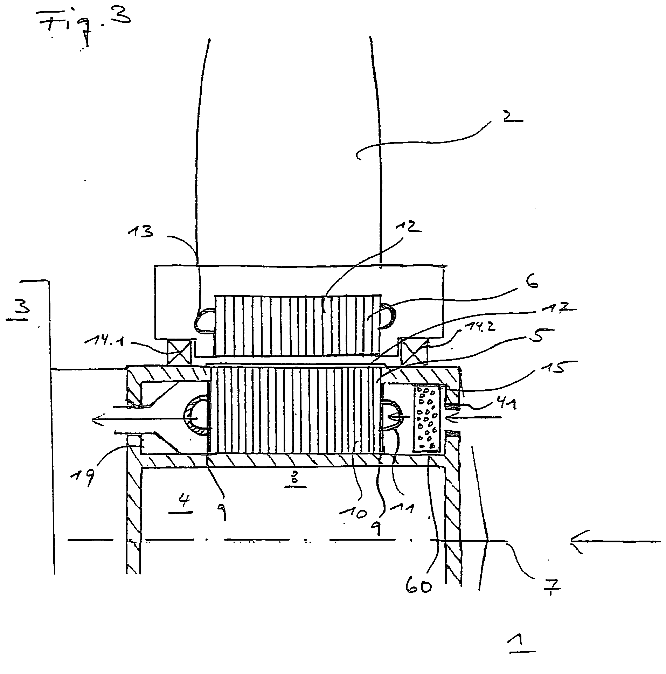

Figur 3 zeigt eine weitere Ausgestaltungsvariante einer erfindungsgemäßen Energieerzeugungsanlage, bei der die Umgebung der zu kühlenden Generatorkomponente vom Umgebungswasser umspült wird. Demnach umschließt das erfindungsgemäß verwendete Korrosionsschutzelement 9 keinen Bereich mit einem Freivolumen, in dem die Generatorkomponenten eingekapselt sind. Stattdessen wird das Korrosionsschutzelement 9 unmittelbar zur jeweiligen Generatorkomponente verlagert. Dieses Prinzip wird nachfolgend anhand eines erfindungsgemäß ausgebildeten Stators 5 als Beispiel einer vorteilhaft gestalteten Generatorkomponente dargelegt.

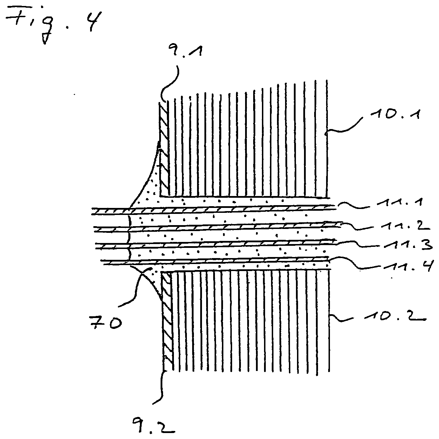

Das Statorblechpaket 10 und die Wicklungsköpfe der Ankerwicklungen 11 erhalten eine Ummantelung durch ein Korrosionsschutzelement 9 in Form eines seewasserresistenten Anstrichs oder einer Tränkung mittels eines seewasserfesten Kunstharzes, insbesondere eines Expoxidharzes. Weiterhin ist es denkbar, das Generatorblechpaket durch ein unmittelbar anliegendes äußeres Gehäuse, das als Korrosionsschutzelement 9 dient, abzukapseln, wobei hierfür ein nicht magnetisches Material, insbesondere ein austenitisches Stahlblech, verwendet werden kann. Ein entsprechendes Ausgestaltungsdetail ist in Figur 4 skizziert. Die dargestellten Abschnitte der Statorblechpakete 10.1, 10.2 sind mit Teilen des Korrosionsschutzelements 9.1, 9.2 eingefasst. Die Durchbrüche und Schnittstellen für die Ankerwicklungen 11.1, 11.2, 11.3, 11.4 am Statorblechpaket 10.1, 10.2 können wiederum durch eine Vergussmasse 70, beispielsweise ein Epoxidharz, abgedichtet sein. Dabei ist die Vergussmasse 70 Teil des Korrosionsschutzelements und steht mit den weiteren Teilen desselben 9.1, 9.2 solchermaßen in Verbindung, dass die einzukapselnde Generatorkomponente, vorliegend die Statorblechpakete 10.1, 10.2, gegen die korrosive Wirkung des Umgebungswassers geschützt werden. Entsprechend werden die Ankerwicklungen mit Korrosionsschutzelementen 9 umkleidet. Hierzu können die Wicklungen wiederum eine seewasserresistente Beschichtung oder einen entsprechend seewasserfesten Mantel aufweisen. Zwischenräume innerhalb der Korrosionsschutzelemente 9 werden wiederum durch ein Wärmeleitmedium ausgefüllt, wobei insbesondere ein Verguss aus Epoxidharz bevorzugt wird. Demgemäß ist es vorteilhaft, auch die Zwischenbereiche der Ankerwicklungen 11, die innerhalb des Statorblechpakets 10 verlaufen, mittels eines Wärmeleitmediums thermisch an das Statorblechpaket 10 anzukoppeln, was wiederum bevorzugt durch eine seewasserresistente Vergussmasse 70 und wiederum insbesondere durch ein Epoxidharz realisiert werden kann.

Wie in Figur 3 dargestellt, wird für die zweite Ausgestaltungsvariante der Erfindung zur effizienten Kühlung der mit den Korrosionsschutzelementen 9 ummantelten Generatorkomponenten das Umgebungswasser durch den Baubereich für den Stator 5 innerhalb der Gondel 4 hindurchgeleitet. Hierzu ist zur Wasseraufbereitung ein Filtersystem an der Zuströmungsöffnung vorgesehen, um insbesondere das Eindringen von Sedimenten zu verhindern. Wiederum kann gemäß einer vorteilhaften Ausgestaltung innerhalb der Gondel 4 an Bereichen, an denen eine Umgebungswassersberührung vorliegt, ein Bewuchsschutzsystem 41 vorgesehen sein.

### Bezugszeichenliste

- 1: tauchende Energieerzeugungsanlage
- 2: Wasserturbine
- 3: Tragstruktur
- 4: Gondel
- 5: Stator
- 6: Läufer
- 7: Drehachse
- 8: elektrischer Generator
- 9,9.1,9.2: Korrosionsschutzelement
- 10, 10.1, 10.2: Statorblechpakete
- 11: Ankerwicklungen
- 12: Läuferblechpakete
- 13: Reglerwicklungen
- 14.1, 14.2: Lager
- 15: Wärmeleitmedium
- 16: Gehäuse
- 17: Spaltrohr
- 18, 18.1, 18.2, 18.3: Kühlrippen
- 19: gekapselter Statorbereich
- 20: gekapselter Läuferbereich
- 30: Durchgangsöffnung im Statorblechpaket
- 40: Durchgangskanal
- 41: Bewuchsschutzsystem
- 50,50.2: Wärmerohr
- 60: Filtersystem
- 70: Vergussmasse
- 75: Rohr
- 80, 80.1 ... 80.n: Heizwendel
- 90: beheizbare Einströmungsöffnung
- 100: separate Wärmequelle
- 110: Kühlkreislauf
- 120: Bypass

## Patentansprüche

1. Tauchende Energieerzeugungsanlage (1), umfassend
1.1 eine an einer Tragstruktur (3) in einer Umgebungsströmung frei stehende Wasserturbine (2);
1.2 einen durch die Wasserturbine (2) wenigstens mittelbar angetriebenen elektrischen Generator (8);
1.3 wenigstens ein Teil der Generatorkomponenten des elektrischen Generators (8) ist von wenigstens einem gegen das Umgebungswasser abdichtenden Korrosionsschutzelement (9) umgeben, wobei Zwischenräume innerhalb des Korrosionsschutzelements (9) durch ein Wärmeleitmedium (15) ausgefüllt sind; **dadurch gekennzeichnet, dass** wenigstens ein Umgebungswasser führender Durchgangskanal (40) zur Abführung von Abwärme der Generatorkomponenten vorgesehen ist, der durch das Korroslonsschutzelement (9) hindurchführt ohne in einen Stoffaustausch mit dem durch das Korrosionsschutzelement abgekapselten Bereich zu treten; und
1.5 an einem luvseitigen Strömungseingang des Durchgangskanals (40) ein Bewuchsschutzsystem (41) angeordnet ist.

2. Tauchende Energieerzeugungsanlage nach Anspruch 1, **dadurch gekennzeichnet, dass** das Bewuchsschutzsystem (41) eine Heizeinrichtung mit einer zugeordneten Vorrichtung zur kurzzeitigen Aktivierung der Heizeinrichtung umfasst.

3. Tauchende Energieerzeugungsanlage nach einem der Ansprüche 1 oder 2, **dadurch gekennzeichnet, dass** wenigstens ein Wärmerohr (50) thermische Energie aus dem Inneren des Korrosionsschutzelements (9) ableitet

4. Tauchende Energieerzeugungsanlage nach einem der vorhergehenden Ansprüche, **dadurch gekennzeichnet, dass** die vom Korrosionsschutzelement (9) umgebene Generatorkomponente der Stator (5) und/oder der Läufer (6) und/oder Komponenten der Ansteuerungs- und Leistungselektronik des elektrischen Generators (8) sind.

5. Tauchende Energieerzeugungsanlage nach einem der vorhergehenden Ansprüche, **dadurch gekennzeichnet, dass** das Korrosionsschutzelement (9) ein Freivolumen umschließt und einen gekapselten Statorbereich (19) und/oder einen gekapselten Läuferbereich (20) bildet.

6. Tauchende Energieerzeugungsanlage nach Anspruch 5, **dadurch gekennzeichnet, dass** das Korrosionsschutzelement (9) ein Teil des Gehäuses (16) und/der der Innenwandungen der Gondel (4) und ein Spaltrohr (17) im Spalt zwischen Stator (5) und Läufer (6) umfasst.

7. Tauchende Energieerzeugungsanlage nach einem der vorhergehenden Ansprüche, **dadurch gekennzeichnet, dass** das Wärmeleitmedium (15) ein flüssiges Medium ist.

8. Tauchende Energieerzeugungsanlage nach Anspruch 7, **dadurch gekennzeichnet, dass** als flüssiges Wärmeleitmedium (15) ein Öl oder eine Ester-Verbindung verwendet wird,

9. Tauchende Energieerzeugungsanlage nach wenigstens einem der Ansprüche 1 bis 6, **dadurch gekennzeichnet, dass** als Wärmeleitmedium (15) ein Festkörper in granularer Form oder ein Festkörper verwendet wird, der als Vergussmasse in die Zwischenräume innerhalb des Korrosionsschutzelements (9) eingebracht wurde.

10. Tauchende Energieerzeugungsanlage nach einem der vorhergehenden Ansprüche, **dadurch gekennzeichnet, dass** das Korrosionsschutzelement (9) auf der Außenseite Kühlrippen (18) aufweist.

11. Tauchende Energieerzeugungsanlage nach einem der vorhergehenden Ansprüche, **dadurch gekennzeichnet, dass** eine Wärmetauschervorrichtung Wärme vom Wärmeleitmedium (15) in das Umgebungswasser abgibt.

12. Tauchende Energieerzeugungsanlage nach Anspruch 1, **dadurch gekennzeichnet, dass** das Korrosionsschutzelement (9) im Wesentlichen der Kontur der zu schützenden Generatorkomponente folgt und der Bauraum der Energieerzeugungsanlage (1), in dem die entsprechende Generatorkomponente platziert ist, vom Umgebungswasser durchströmt wird.

13. Tauchende Energieerzeugungsanlage nach Anspruch 12, **dadurch gekennzeichnet, dass** an der Einströmungsöffnung zur Zuführung des Umgebungswassers in das Innere der Energieerzeugungsanlage (1) ein Filtersystem (60) vorgesehen ist.

## Claims

1. A submersible power generation plant (1), comprising
1.1 a water turbine (2) standing freely on a support structure (3) in an ambient flow;
1.2 an electric generator (8) which is driven at least indirectly by the water turbine (2);
1.3 at least a part of the generator components of the electric generator (8) is enclosed by at least one corrosion protection element (9) which seals against the ambient water, with the cavities within the corrosion protection element (9) being filled with a heat-conductive medium (15),
**characterized in that**
at least one pass-through duct (40) being provided for dissipating waste heat from the generator components, which duct conducts ambient water and leads through the corrosion protection element (9) without entering into any material exchange with the region encapsulated by the corrosion protection element, and
1.4 a growth protection system (41) is arranged on a flow input of the pass-through duct (40) on the upstream side.

2. A submersible power generation plant according to claim 1, **characterized in that** the growth protection system (41) comprises a heating device with an associated apparatus for short-time activation of the heating device.

3. A submersible power generation plant according to claim 1 or 2, **characterized in that** at least one heat pipe (50) dissipates thermal energy from the interior of the corrosion protection element (9).

4. A submersible power generation plant according to one of the preceding claims, **characterized in that** the generator components enclosed by the corrosion protection element (9) are the stator (5) and/or rotor (6) and/or components of the control and power electronics of the electric generator (8).

5. A submersible power generation plant according to one of the preceding claims, **characterized in that** the corrosion protection element (9) encloses a free volume and forms an encapsulated stator region (19) and/or an encapsulated rotor region (20).

6. A submersible power generation plant according to claim 5, **characterized in that** the corrosion protection element (9) comprises a part of the housing (16) and/or the inside wall of the gondola (4) and a can (17) in the gap between the stator (5) and the rotor (6).

7. A submersible power generation plant according to one of the preceding claims, **characterized in that** the heat-conductive medium (15) is a fluid medium.

8. A submersible power generation plant according to claim 7, **characterized in that** an oil or an ester compound is used as a fluid heat-conductive medium (15).

9. A submersible power generation plant according to one of the claims 1 to 6, **characterized in that** a solid body in granular form or a solid body which was introduced as a casting compound into the cavities within the corrosion protection element (9) was introduced as a heat-conductive medium (15).

10. A submersible power generation plant according to one of the preceding claims, **characterized in that** the corrosion protection element (9) comprises cooling fins (18) on its outside.

11. A submersible power generation plant according to one of the preceding claims, **characterized in that** a heat exchanger apparatus emits heat from the heat-conductive medium (15) to the ambient water.

12. A submersible power generation plant according to claim 1, **characterized in that** the corrosion protection element (9) substantially follows the shape of the generator component to be protected and the installation space of the power generation plant (1) in which the respective generator component is placed and flowed through by ambient water.

13. A submersible power generation plant according to claim 12, **characterized in that** a filter system (60) is provided at the inflow opening for supplying ambient water to the interior of the power generation plant (1).

## Revendications

1. Installation de génération d'énergie submersible (1), comprenant
1.1 une turbine hydraulique (2) placée librement sur une structure portante (3) dans un flux environnant ;
1.2 un générateur électrique (8) pouvant être entraîné au moins indirectement par la turbine hydraulique (2) ;
1.3 dans laquelle au moins une partie des composants du générateur électrique (8) est entourée par au moins un élément anticorrosion (9) assurant l'étanchéité vis-à-vis de l'eau environnante, les espaces intermédiaires à l'intérieur de l'élément anticorrosion (9) étant remplis avec un matériau conduisant la chaleur (15), **caractérisée en ce qu'**il est prévu au moins un canal de passage (40) acheminant de l'eau environnante pour évacuer la chaleur libérée par les composants du générateur, lequel traverse l'élément anticorrosion (9) sans échange de matière avec la zone encapsulée par l'élément anticorrosion et
1.4 un système de protection antialgues (41) est disposé sur une entrée d'écoulement du côté d'amont du canal de passage (40).

2. installation de génération d'énergie submersible selon la revendication 1, **caractérisée en ce que** le système de protection antialgues (41) comprend un dispositif de chauffage associé à un dispositif pour l'activation de courte durée du dispositif de chauffage.

3. Installation de génération d'énergie submersible selon l'une des revendications 1 ou 2, **caractérisée en ce qu'**au moins un tuyau chauffant (60) extrait de l'énergie thermique de l'intérieur de l'élément anticorrosion (9).

4. Installation de génération d'énergie submersible selon l'une des revendications précédentes, **caractérisée en ce que** les composants de générateur entourés par l'élément anticorrosion (9) sont le stator (5) et/ou le rotor (6) et/ou des composants électroniques de commande et de puissance du générateur électrique (8).

5. Installation de génération d'énergie submersible selon l'une des revendications précédentes, **caractérisée en ce que** l'élément anticorrosion (9) renferme un volume libre et forme une zone de stator encapsulée (19) et/ou une zone de rotor encapsulée (20).

6. Installation de génération d'énergie submersible selon la revendication 5, **caractérisée en ce que** l'élément anticorrosion (9) renferme une partie du corps (16) et/ou des parois intérieures de la nacelle (4) et un tube fendu (17) dans la fente entre le stator (5) et le rotor (6).

7. Installation de génération d'énergie submersible selon l'une des revendications précédentes, **caractérisée en ce que** le matériau conduisant la chaleur (15) est un liquide.

8. Installation de génération d'énergie submersible selon la revendication 7, **caractérisée en ce que** le matériau liquide conduisant la chaleur (15) utilisé est une huile ou un composé d'ester.

9. Installation de génération d'énergie submersible selon l'une des revendications 1 à 6, **caractérisée en ce que** le matériau conduisant la chaleur (15) utilisé est un solide sous forme de granulés ou un solide introduit sous la forme d'une masse coulée dans les espaces intermédiaires à l'intérieur de l'élément anticorrosion (9).

10. Installation de génération d'énergie submersible selon l'une des revendications précédentes, **caractérisée en ce que** l'élément anticorrosion (9) présente des ailettes de refroidissement (18) sur sa face extérieure.

11. Installation de génération d'énergie submersible selon l'une des revendications précédentes, **caractérisée en ce qu'**un dispositif échangeur de chaleur dégage la chaleur du matériau conduisant la chaleur (15) dans l'eau environnante.

12. Installation de génération d'énergie submersible selon la revendication 1, **caractérisée en ce que** l'élément anticorrosion (9) suit pour l'essentiel le contour des composants de générateur à protéger et l'espace de construction de l'installation de génération d'énergie (1) dans lequel sont placés les composants de générateur correspondants est parcouru par l'eau environnante.

13. Installation de génération d'énergie submersible selon la revendication 12, **caractérisé en ce qu'**un système de filtration (60) est prévu au niveau de l'ouverture d'entrée destinée à amener l'eau environnante à l'intérieur de l'installation de génération d'énergie (1).
